# FASCICULE DE BREVET EUROPEEN

(11) **EP 2 392 750 B1**
(45) Date de publication et mention de la délivrance du brevet: **22.08.2012**
(21) Numéro de dépôt: 11168997.2
(22) Date de dépôt: 07.06.2011
(51) Int. Cl.: E04G 5/04, F16B 13/00, F16B 13/08

(54) **Attache volante de support et de fixation d'une structure sur une paroi, munie d'un adaptateur**
Bewegliche Befestigung zum Abstützen und Befestigen einer Struktur an einer Wand, die mit einem Adapter ausgestattet ist
Tie for removably supporting and attaching a structure to a wall, provided with an adapter

(30) Priorité: 07.06.2010 FR 1054464
(43) Date de publication de la demande: 07.12.2011
(73) Titulaire: Sateco, 86110 Mirebeau (FR)
(72) Inventeur: Micheneau, Patrick, 79300 BRESSUIRE (FR); Braud, Thierry, 86190 VOUILLE (FR)
(74) Mandataire: Gevers France

(56) Documents cités:
- EP-A2- 0 183 983
- DE-A1- 2 238 777
- FR-A1- 2 678 016
- FR-A1- 2 917 471
- US-A- 4 286 497

## Description

La présente invention concerne une attache de support et de fixation d'une structure, notamment une structure de travail en encorbellement, l'attache étant du type destinée à être insérée à travers un orifice traversant d'une paroi depuis un côté de la paroi opposé à la structure, l'attache comprenant :
- un corps allongé adapté pour traverser la paroi de part en part, entre une première face de la paroi, du côté opposé à la structure, et une deuxième face opposée de la paroi, du côté de la structure ;
- au moins un organe déployable monté mobile par rapport au corps entre une première position d'insertion et de retrait de l'attache à travers la paroi et une deuxième position déployée, dans laquelle il fait saillie à l'extérieur du corps.

Il est connu d'utiliser, pour fixer des structures, et notamment des structures de travail en encorbellement, à une paroi, des attaches de support et de fixation qui sont destinées à être insérées dans un orifice de la paroi à partir d'un côté de la paroi opposé à celui où la structure est destinée à être agencée. Ces attaches peuvent ainsi être insérées depuis l'intérieur d'un bâtiment, ce qui diminue les risques pour l'opérateur lors de la mise en place de la structure. Le déploiement des organes de retenue de la structure dont l'attache est munie et le serrage de l'attache peuvent également être réalisés depuis l'intérieur du bâtiment. FR-A-2 917 471 montre un exemple d'une telle attache.

Il est souvent nécessaire d'insérer l'attache dans des orifices traversants de forme convergente, notamment tronconique. A cet effet, l'attache, et notamment le corps de l'attache, présentent une forme et des dimensions adaptées à la forme convergente de l'orifice. Cependant, ces attaches ne sont alors pas adaptées à des situations où les orifices convergent en sens inverse.

Un but de l'invention est de fournir une attache présentant non seulement une sûreté d'utilisation importante, mais également une flexibilité d'utilisation améliorée.

A cet effet, l'invention a pour objet une attache du type précité, caractérisée en ce que l'attache comprend en outre un adaptateur en matériau rigide, monté sur le corps, et délimitant une portée d'appui contre une surface interne supérieure de l'orifice traversant, et en ce que le corps et l'adaptateur comportent en outre des moyens complémentaires de solidarisation en rotation.

Suivant des modes particuliers de réalisation, l'attache selon l'invention comporte une ou plusieurs des caractéristiques suivantes, prise(s) isolément ou suivant toutes les combinaisons techniquement possibles :
- l'adaptateur est monté coulissant sur le corps le long de l'axe longitudinal du corps;
- l'attache comprend en outre un organe de serrage de l'attache sur la paroi, ledit organe de serrage étant propre à prendre appui sur ladite première face de la paroi, et l'adaptateur est solidaire dudit organe de serrage ;
- l'adaptateur est propre à être poussé dans l'orifice de la paroi au moyen d'un organe de poussée, de préférence par vissage d'un écrou sur le corps ;
- l'adaptateur est une rondelle en forme de fer à cheval chevauchant le corps et comportant une âme en saillie vers le haut par rapport au corps et deux ailes enserrant le corps et s'étendant vers le bas à partir de !'âme ;
- l'adaptateur a un contour extérieur circulaire
- les moyens complémentaires de solidarisation en rotation comprennent deux méplats s'étendant dans des plans parallèles et formés sur le corps, ces méplats coopérant chacun avec une surface intérieure complémentaire respective de l'adaptateur;
- le corps comprend un tronçon distal sensiblement cylindrique et la hauteur de l'attache au droit de l'adaptateur et le diamètre du tronçon distal du corps sont sensiblement égaux et en outre sensiblement égaux au diamètre minimal de l'orifice dans lequel l'attache est destinée à être insérée ;
- l'adaptateur a un diamètre sensiblement égal au diamètre du tronçon distal du corps ;
- l'attache comprend en outre des moyens de déplacement de l'au moins un organe déployable entre la première position et la deuxième position, lesdits moyens de déplacement comprenant un coulisseau, adapté pour coulisser dans le corps de manière à déplacer l'au moins un organe déployable entre la première position et la deuxième position, et, pour chaque organe déployable, un pion solidaire du coulisseau et adapté pour coopérer avec une lumière oblongue formée dans l'organe déplorable de manière à déplacer chaque organe déployable de sa première position vers sa deuxième position lors du coulissement du coulisseau dans un sens et à déplacer chaque organe déployable de sa deuxième position vers sa première position lors d'un coulissement du coulisseau dans un sens opposé.

Un autre but de l'invention est de fournir une attache de support présentant une durée de vie importante.

A cet effet, suivant une caractéristique de l'invention, au moins certaines pièces de l'attache présentent une couche de surface propre à protéger l'attache contre la corrosion et à faciliter le mouvement entre les pièces de l'attache sans ajout de lubrifiant.

Un troisième but de l'invention est d'améliorer la robustesse du support de la structure par l'attache.

A cet effet, suivant une autre caractéristique de l'invention, l'un des organes déployables est une patte de retenue de la structure, laquelle comporte à une extrémité proximale une surface sensiblement plane d'appui de la structure, adaptée pour recevoir la structure en appui axial et prolongée en direction d'une extrémité distale de la patte de retenue par une surface concave qui, en cours d'utilisation, n'est pas en contact avec la structure.

L'invention a également pour objet un ensemble de structure de travail en encorbellement comprenant une structure de travail en encorbellement et au moins une attache de support et de fixation telle que décrite précédemment, adaptée pour assurer le support de la structure.

L'invention sera mieux comprise à la lecture de la description qui va suivre, donnée uniquement à titre d'exemple et faite en se référant aux dessins annexés, sur lesquels :
- la figure 1 est une vue latérale schématique d'un ensemble de structure de travail en encorbellement suivant l'invention et d'une paroi sur laquelle ledit ensemble est destiné à être fixé ;
- la figure 2 est une vue schématique en coupe de l'attache dans une configuration d'insertion et de retrait ;
- la figure 3 est une vue schématique en section transversale de l'attache de la figure 2, prise suivant la ligne III-III de la figure 2 ;
- la figure 4 est une vue schématique en coupe de l'attache de la figure 1, après insertion dans un orifice tronconique divergent de la paroi, l'attache étant dans une configuration déployée et serrée sur la paroi ;
- la figure 5 est une vue analogue à la figure 4, l'attache étant insérée dans un orifice tronconique convergent de la paroi ; et
- la figure 6 est une vue schématique de l'attache de la figure 4, supportant une structure de travail en encorbellement.

Dans la description qui suit, les termes « proximal et « distal » sont utilisés en référence à la position de l'opérateur. Ainsi, « proximal désigne la partie d'une pièce la plus proche de l'opérateur et « distal » désigne la partie d'une pièce plus éloignée de l'opérateur lors de la mise en place et de l'actionnement de l'attache de support et de fixation.

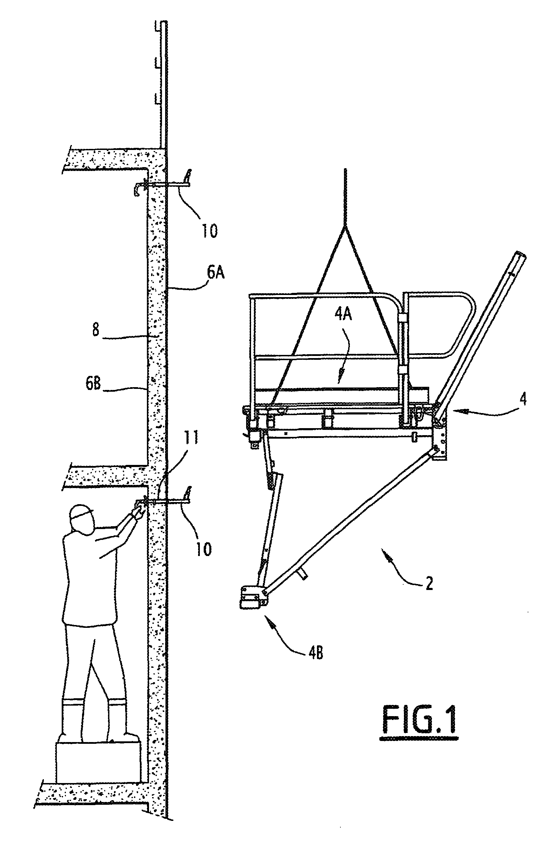

La figure 1 illustre l'environnement dans lequel un ensemble 2 de structure 4 de travail en encorbellement est généralement utilisé.

L'ensemble 2 comprend une structure 4 de travail en encorbellement, destinée à être positionnée contre une face extérieure 6A d'une paroi 8 d'un bâtiment. La structure 4 de travail en encorbellement présente une plateforme 4A de travail et des béquilles 4B d'appui contre la paroi 8.

L'ensemble 2 comprend également des attaches 10 de support et de fixation de la structure 4 de travail en encorbellement sur la paroi 8. Les attaches 10 reçoivent, à cet effet, la plateforme 4A de travail.

Les attaches 10 sont destinées à être insérées à travers un orifice traversant 11 de la paroi 8 depuis un côté de la paroi 8 opposé à la structure 4 de travail en encorbellement, à savoir le côté de la face intérieure 6B de la paroi 8. Comme l'illustre la figure 1, les attaches 10 peuvent être insérées et actionnées en toute sécurité par un opérateur depuis le côté de la paroi 8 opposé à la structure 4.

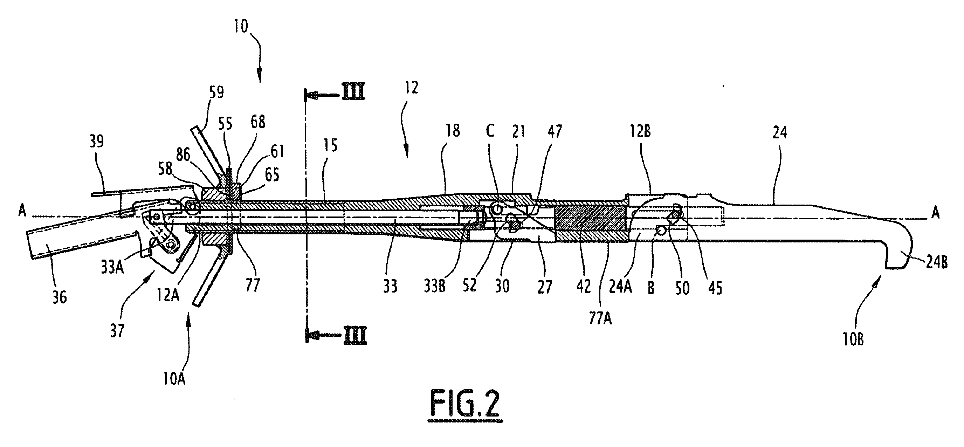

L'attache 10 est illustrée plus en détail sur les figures 2 à 6. Elle comprend un corps 12 allongé d'axe longitudinal A, destiné à traverser la paroi 8 de part en part entre la face intérieure 68 et la face extérieure 6A.

Le corps 12 comprend successivement, en partant de l'extrémité proximale 12A du corps 12 (à gauche sur les figures), un tronçon proximal 15 fileté, un tronçon intermédiaire 18 de forme sensiblement tronconique et divergente en direction de l'extrémité distale 12B du corps 12, et un tronçon distal 21 de forme sensiblement cylindrique.

L'attache 10 comporte en outre, de manière connue, des organes déployables, montés sur le corps 12 et mobiles par rapport au corps 12 entre une position d'insertion et de retrait, dans laquelle ils ne font sensiblement pas saillie radialement par rapport au corps 12, et une position déployée, dans laquelle ils font saillie radialement par rapport au corps 12.

Ces organes déployables comprennent, de manière connue, une patte ou crochet 24 de retenue de la structure 4 de travail en encorbellement et un loquet 27 de serrage de l'attache 10 sur la paroi 8, destiné à prendre appui sur la face extérieure 6A de la paroi 8 par l'intermédiaire d'une surface d'appui sensiblement plane 30.

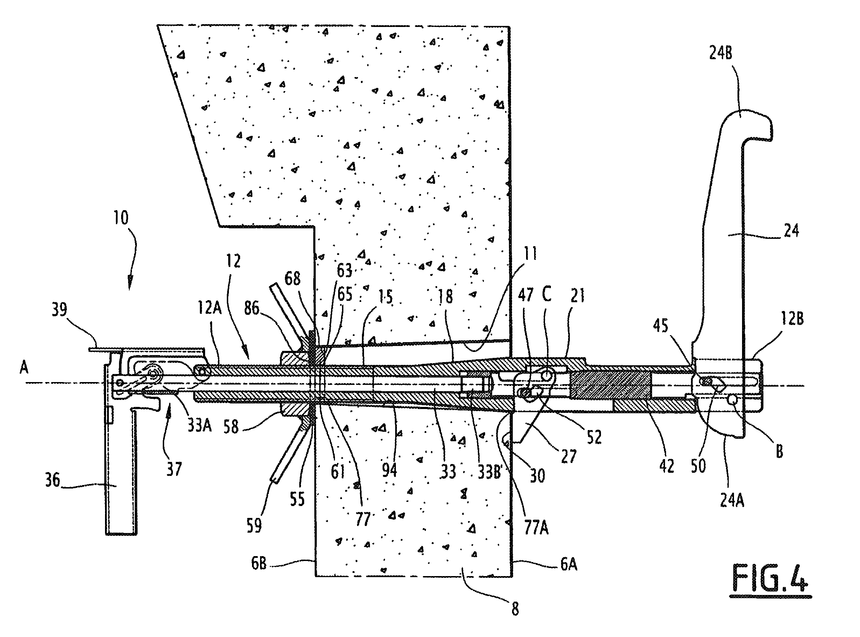

La patte 24 est montée rotative autour d'un axe de rotation B sur le tronçon distal 21 du corps 12. Elle est articulée sur le corps 12 par son extrémité proximale 24A. Dans la position d'insertion et de retrait (figure 2), la patte 24 s'étend dans le prolongement du corps 12, à l'écart du corps 12, sensiblement selon l'axe longitudinal A du corps 12, sans faire saillie notablement dans le sens radial par rapport à ce corps 12. Dans la position déployée (figures 4 à 6), la patte 24 s'étend vers le haut, sensiblement perpendiculairement à l'axe longitudinal A du corps 12. Pour passer de sa position d'insertion et de retrait à sa position déployée, la patte 24 pivote autour de son axe B dans le sens antihoraire.

Le loquet 27 est monté rotatif sur le corps 12, autour d'un axe de rotation C parallèle à l'axe B. Dans la position déployée, il fait saillie vers le bas par rapport au corps 12 de l'attache 10. Pour passer de sa position d'insertion et de retrait à sa position déployée, le loquet 27 pivote autour de son axe C dans le sens horaire,

Les organes déployables 24, 27 sont aptes à être déplacés simultanément entre leurs positions déployées et leurs positions d'insertion et de retrait respectives par l'intermédiaire de moyens de déplacement.

Les moyens de déplacement comprennent, de manière connue, une tige 33 montée coulissante le long de l'axe longitudinal A à l'intérieur du corps 12 et solidaire du corps 12 en rotation autour de l'axe longitudinal A, par exemple par clavetage de ses deux parties d'extrémité.

La translation de la tige 33 dans un premier sens, à savoir vers l'extrémité proximale 10A de l'attache 10 (à gauche sur les figures), déploie la patte 24 et le loquet 27, tandis que la translation de la tige 33 dans le sens opposé, à savoir vers l'extrémité distale 10B de l'attache 10 (à droite sur les figures), déplace la patte 24 et le loquet 27 de leur position déployée vers leur position d'insertion et de retrait.

Pour son déplacement en translation, la tige 33 est munie, à son extrémité proximale 33A, d'un organe d'actionnement s'étendant à l'extérieur du corps 12.

Dans le mode de réalisation représenté sur les figures 2 à 6, l'organe d'actionnement est une poignée 36, mobile entre une première position, dans laquelle elle s'étend sensiblement le long de l'axe longitudinal A, et une deuxième position, dans laquelle elle s'étend sensiblement perpendiculairement à l'axe longitudinal A. Le déplacement de la poignée 36 de sa première position à sa deuxième position engendre un coulissement de la tige 33 vers l'extrémité proximale 10A de l'attache 10 et ainsi un déplacement de la patte 24 et du loquet 27 de leurs positions d'insertion et de retrait vers leurs positions déployées respectives ; le déplacement de la poignée 36 de sa deuxième position vers sa première position engendre un coulissement de la tige 33 en sens inverse Ces mouvements sont obtenus grâce à une tringlerie articulée 37 reliant la poignée 36 aux extrémités proximales du corps 12 d'une part, de la tige 33 d'autre part.

La poignée 36 est munie d'un organe de verrouillage 39, propre à bloquer la poignée 36 dans sa deuxième position de manière à éviter un déplacement non intentionnel de la patte 24 et du loquet 27 vers leurs positions d'insertion et de retrait respectives.

La tige 33 est prolongée à son extrémité distale 33B par un coulisseau 42, solidaire de la tige 33 et apte à coulisser à l'intérieur du corps 12 le long de l'axe longitudinal A du corps 12. En variante, la tige 33 et le coulisseau 42 sont formés d'une pièce.

L'attache 10 comprend en outre deux pions 45, 47, solidaires en translation du coulisseau 42 et propres à coopérer chacun avec une lumière 50, 52 oblongue, formée respectivement dans la patte 24 et dans le loquet 27, pour déplacer la patte 24 et le loquet 27 entre leurs positions déployées et leurs positions d'insertion et de retrait respectives lors du coulissement du coulisseau 42 à l'intérieur du corps 12.

A cet effet, les pions 45, 47 sont positionnés respectivement à l'écart de l'axe de rotation B, C de l'organe déployable 24, 27 avec lequel ils coopèrent. Les lumières 50, 52 comportent avantageusement chacune deux portions oblongues formant entre elles un angle obtus.

Lors du coulissement du coulisseau 42 dans le corps 12 vers la gauche de la figure 2, les pions 45, 47 coulissent à l'intérieur du corps 12 parallèlement à l'axe longitudinal A, et chaque pion 45, 47 vient en appui contre le bord de la lumière oblongue 50, 52 correspondante. Il s'exerce alors sur l'organe déployable 24, 27 correspondant un couple engendrant une rotation de l'organe déployable 24, 27 autour de son axe respectif B, C.

Les mécanismes d'actionnement des organes 24 et 27 par la poignée 36 sont connus en soi et ne seront donc pas décrits plus en détail. Ils peuvent d'ailleurs être remplacés par tout autre mécanisme d'actionnement approprié, par exemple tels que décrits dans le FR-A-2 917 471 précité.

L'attache 10 comprend en outre des moyens complémentaires de serrage de l'attache 10 sur la paroi 8. Ces moyens de serrage comprennent une rondelle de serrage 55, montée coulissante sur le tronçon proximal 15 du corps 12 et destinée à prendre appui sur la face intérieure 6B de la paroi 8. Ainsi, la rondelle de serrage 55 et le loquet 27 sont aptes à enserrer entre eux la paroi 8 de manière à fixer l'attache 10 sur la paroi 8.

Un organe de poussée, monté sur le tronçon proximal 15 du corps 12, est mobile le long de l'axe longitudinal A du corps 12 et est propre à pousser la rondelle de serrage 55 en appui contre la face intérieure 68 de la paroi 8. Cet organe de poussée est en particulier un écrou 58, destiné à être vissé sur le tronçon proximal fileté 15 du corps 12 pour serrer l'attache 10 contre la paroi 8.

L'écrou 58 présente une tête de manoeuvre à bras radiaux 59 conformée pour un actionnement manuel depuis l'extrémité proximale 10A de l'attache 10.

L'attache 10 comprend également un adaptateur 61 en matériau rigide, par exemple en acier, monté sur le tronçon proximal 15 du corps 12. L'adaptateur 61 est solidaire en rotation du corps 12 et mobile en translation le long du corps 12 selon l'axe longitudinal A.

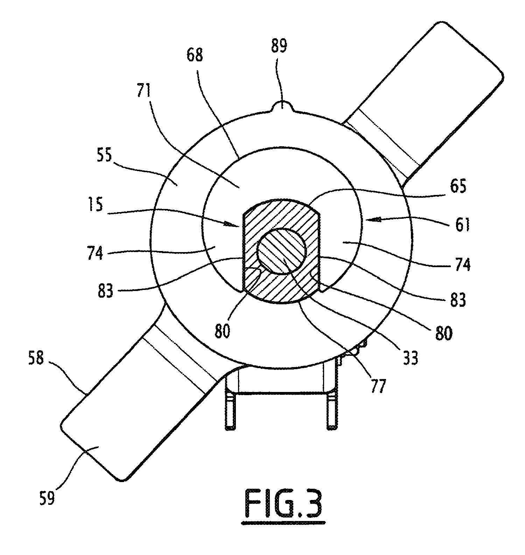

En référence aux figures 3 à 6, l'adaptateur 61 fait saillie vers le haut par rapport au corps 12. L'adaptateur 61 est dimensionné de manière à remplir l'espace entre une surface supérieure 63 de la paroi intérieure de l'orifice traversant 11, 11' et une surface supérieure 65 du corps 12 de l'attache 10. A cet effet, l'adaptateur 61 présente une portée supérieure d'appui 68 sur la surface interne supérieure 63 de l'orifice 11, 11'.

L'adaptateur 61 a pour fonction d'empêcher un basculement de l'attache 10 par rapport à l'horizontale sous l'effet du poids de la structure 4 et de permettre l'utilisation d'une même attache 10 avec des orifices traversants 11 et 11' de conicités opposées. L'attache selon invention présente donc une flexibilité d'utilisation accrue.

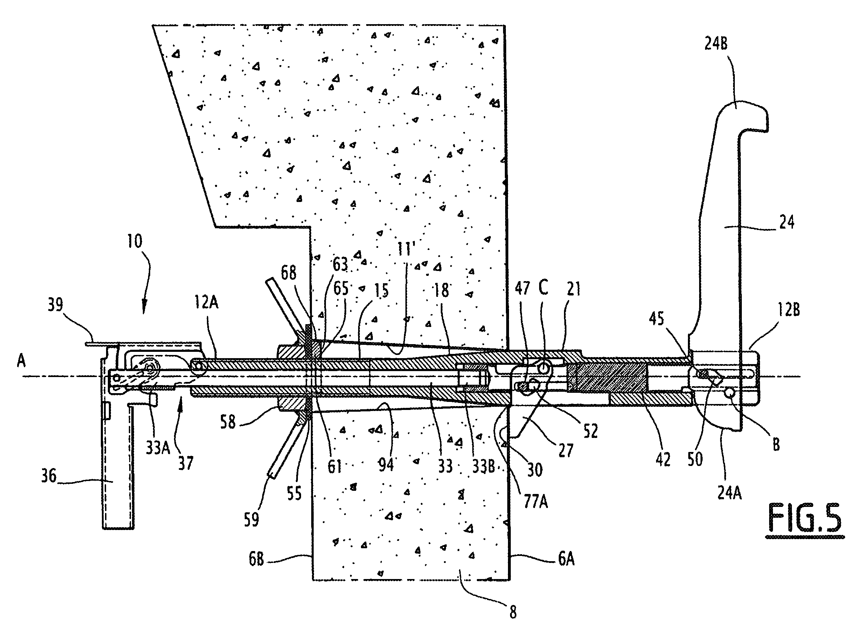

Comme cela est illustré respectivement aux figures 4 et 5, l'orifice 11 est par exemple divergent en direction de la face extérieure 6A de la paroi 8, tandis que l'orifice 11' est convergent en direction de la face extérieure 6A de la paroi 8. Les orifices 11 et 11' ont de préférence le même angle de cône. Les orifices 11 et 11' ont des diamètres minimaux de préférence sensiblement égaux.

En outre, il s'agit de préférence d'orifices tronconiques de révolution, c'est-à-dire de section transversale circulaire.

En variante, les orifices 11 et 11' ont une forme tronconique à section non circulaire. Il s'agit par exemple d'orifices tronconiques à section carrée ou rectangulaire.

Comme cela est illustré plus en détail sur la figure 3, l'adaptateur 61 est une rondelle en forme de fer à cheval chevauchant le tronçon proximal 15 du corps 12. L'adaptateur 61 comprend une âme 71 en saillie vers le haut par rapport au corps 12. La surface supérieure de l'âme 71 de l'adaptateur 61 forme la portée d'appui 68.

L'âme 71 est prolongée vers le bas par deux ailes 74, enserrant le corps 12. L'adaptateur 61 n'entoure pas entièrement la périphérie du corps 12. Ainsi, il laisse découverte une partie de la surface extérieure du corps 12 au droit de l'adaptateur 61, et en particulier la surface inférieure 77 du corps 12, comme cela est représenté en particulier sur la figure 3.

Les surfaces intérieures 80 des ailes 74 sont sensiblement planes et parallèles entre elles. Elles coopèrent chacune avec un méplat 83 (figure 3), formé sur le tronçon proximal 15 du corps 12, de manière à solidariser l'adaptateur 61 et le corps 12 en rotation.

Dans le mode de réalisation représenté, les méplats 83 sont de forme allongée selon l'axe longitudinal A du corps 12. lis sont symétriques l'un de l'autre par rapport à un plan vertical passant par l'axe A. Comme cela est illustré sur la figure 3, le tronçon proximal 15 du corps 12 a donc une section transversale constituée de deux arcs de cercle, supérieur et inférieur, reliés entre eux par des droites verticales parallèles entre elles. Les surfaces supérieure et inférieure du corps 12 portent le filetage qui coopère avec l'écrou 58.

Les méplats 83 du corps 12 et les surfaces intérieures 80 des ailes 74 de l'adaptateur 61 forment des moyens complémentaires de solidarisation en rotation de l'adaptateur 61 et du corps 12.

Les méplats 83 participent en outre au guidage en translation de l'adaptateur 61 le long du corps 12.

L'adaptateur 61 présente une surface plane d'appui 86, propre à prendre appui axialement sur une surface distale de la rondelle de serrage 55. L'adaptateur 61 est ainsi propre à être poussé dans l'orifice traversant 11, 11' et en appui radial contre la surface interne supérieure 63 de l'orifice 11, 11' lorsque l'écrou 58 est vissé sur le corps 12.

En variante, l'adaptateur 61 peut être solidaire de la rondelle de serrage 55, et en particulier formé d'une pièce avec cette rondelle 55.

Comme cela est illustré sur la figure 3, la rondelle de serrage 55 peut présenter en outre une saillie supérieure de détrompage 89, propre à indiquer à l'opérateur le sens de déploiement de la patte 24.

L'adaptateur 61 est réalisé dans un matériau rigide de manière à éviter sa déformation sous l'effet de la force exercée par la surface interne supérieure 63 de l'orifice 11, 11' sur l'adaptateur 61 en réaction au poids de la structure 4 lorsque celle-ci est fixée sur l'attache 10.

L'adaptateur 61 est dimensionné de sorte qu'au droit de l'adaptateur 61, la hauteur de l'attache 10 munie de l'adaptateur 61 soit égale au diamètre minimal de l'orifice 11, 11'. En outre, dans le mode de réalisation des figures 2 à 6, l'adaptateur 61 a un contour extérieur sensiblement circulaire et son diamètre est sensiblement égal au diamètre minimal de l'orifice 11, 11'.

Le tronçon distal cylindrique 21 du corps 12 a également un diamètre sensiblement égal au diamètre minimal de l'orifice 11, 11'. Ainsi le diamètre de l'adaptateur 61 de contour circulaire est sensiblement égal au diamètre du tronçon distal 21 du corps 12.

L'égalité entre le diamètre du contour extérieur de l'adaptateur 61, le diamètre du tronçon distal 21 du corps 12 et le diamètre minimal de l'orifice 11, 11l' assure un centrage stable de l'attache 10 dans l'orifice 11, 11'.

La figure 4 représente l'attache 10 insérée dans un orifice 11 divergent en direction de la face extérieure 6A. Dans cette configuration, l'attache 10 prend appui radialement, du côté proximal de l'orifice 11 (à gauche sur la figure 4), sur sensiblement toute la circonférence de la surface interne de l'orifice 11 par l'intermédiaire du contour extérieur de l'adaptateur 61, et notamment de la portée supérieure d'appui 68 de l'adaptateur 61, et d'une surface inférieure 77 du corps 12. Du côté distal de l'orifice 11 (à droite sur la figure 4), l'attache 10 prend appui sur une surface interne inférieure 94 de l'orifice 11 par l'intermédiaire de la surface inférieure 77A du tronçon distal 21 du corps 12.

Ainsi, dans la configuration de la figure 4, l'attache 10 présente au moins deux zones d'appui sur la surface interne de l'orifice 11. En outre, au niveau de l'adaptateur 61, l'attache 10 prend appui sur toute la circonférence de la surface interne de l'orifice 11, ce qui assure un centrage stable de l'attache 10 dans l'orifice 11 du côté proximal.

La figure 5 représente l'attache 10 insérée dans un orifice 11' convergent vers la face extérieure 6A. Dans cette configuration, la hauteur, au droit de l'adaptateur 61, de l'attache 10 munie de l'adaptateur 61 est inférieure au diamètre de l'orifice 11' du côté proximal (à gauche sur la figure 5). L'attache 10 prend alors appui, du côté proximal de l'orifice 11', uniquement sur la surface interne supérieure 63 de la paroi intérieure de l'orifice 11' par l'intermédiaire de la portée d'appui 68 de l'adaptateur 61.

Du côté distal de l'orifice 11' (à droite sur la figure 5), le diamètre du corps 12 est sensiblement égal au diamètre de l'orifice 11'. L'attache 10 prend donc, du côté distal de l'orifice 11 appui radialement sur toute la circonférence de la surface interne de l'orifice 11', ce qui assure un centrage stable de l'attache 10 dans l'orifice 11' du côté distal.

Ainsi, quel que soit le sens de la conicité de l'orifice 11, 11', l'attache 10 est parfaitement centrée et stabilisée dans l'orifice 11, 11' avant la mise en place de la structure 4. Après cette mise en place, dans les deux cas, l'effort de basculement est repris aux deux extrémités de l'orifice 11, 11'.

La fixation de l'attache 10 sur la paroi 8 est particulièrement sûre, puisque quel que soit le sens de la conicité de l'orifice, l'attache 10 présente au moins une zone d'appui inférieure et une zone d'appui supérieure sur la paroi intérieure de l'orifice 11, 11' dans lequel elle est insérée.

Les dimensions verticales du corps 12 de l'attache 10 et de l'adaptateur 61 assurent que l'axe longitudinal A de l'attache 10 reste sensiblement horizontal en cours d'utilisation de l'attache 10.

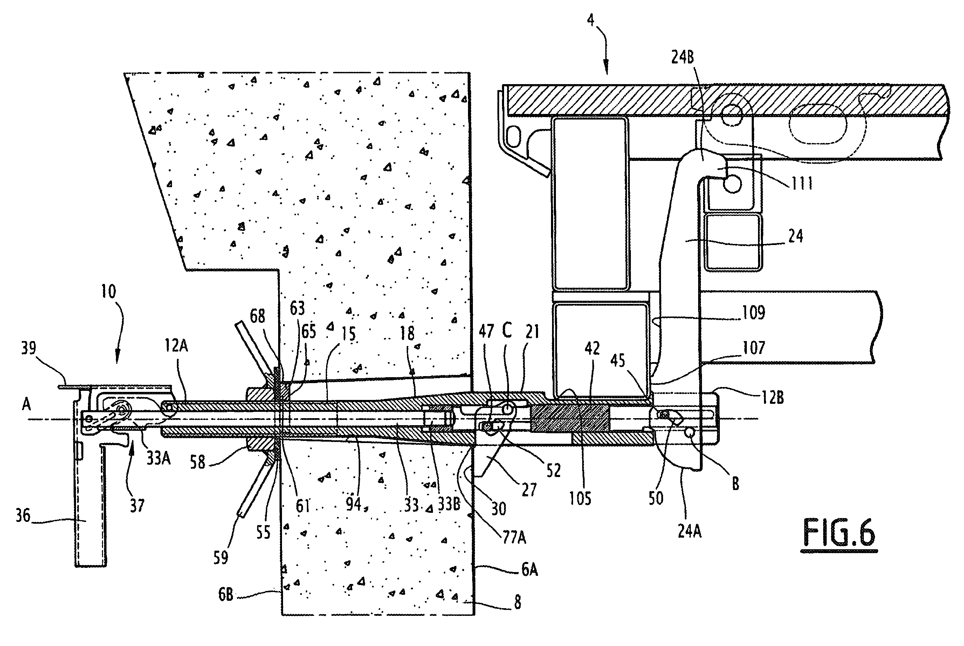

Comme cela est illustré sur la figure 6, le corps 12 comporte, sur le tronçon distal 21, une portée d'appui 105 sensiblement plane et horizontale de la structure 4 de travail en encorbellement. Cette portée d'appui 105 coopère avec une surface de retenue verticale 107 formée sur la patte 24 et destinée à recevoir la structure 4 en appui axial, La surface de retenue 107 est prolongée en direction de l'extrémité distale 24B de la patte 24 par une surface concave 109 qui, en cours d'utilisation, n'est pas en contact avec la structure 4.

Cette forme particulière de la patte 24 permet de réduire les efforts exercés par la structure 4 sur la patte 24 et tendant à rabattre la patte 24 vers sa position d'insertion et de retrait. En effet, la patte 24 présente une surface de contact réduite avec la structure 4, proche de l'axe A. Le couple de rabattement exercé par la structure 4 sur la patte 24 est donc faible.

La patte de retenue 24 présente à son extrémité libre, de manière connue, un crochet 111 d'accrochage de la structure 4, pour une retenue verticale de la structure 4.

Selon un mode de réalisation, l'intérieur et l'extérieur du corps 12 de l'attache 10, ainsi que les organes montés coulissants à l'intérieur du corps 12, c'est-à-dire la tige 33 et le coulisseau 42, et le loquet 27 présentent un état de surface, par exemple une couche de surface obtenue par un traitement de nitruration, en particulier par un traitement d'oxynitrocarburation de type ARCOR®.

Les pions 45 et 47, la patte 24, la poignée 36 et la tringlerie 37 associée, ainsi que l'écrou 58, la rondelle de serrage 55 et l'adaptateur 61 ne comportent pas de tel état de surface.

Ce traitement de surface est propre à protéger l'attache 10 contre la corrosion. En outre, il assure un graissage à sec et facilite le mouvement entre les pièces de l'attache 10, et notamment le coulissement du coulisseau 42 et de la tige 33 dans le corps 12 sans ajout de lubrifiant. Un tel traitement de surface augmente donc la durée de vie de l'attache 10.

## Revendications

1. Attache (10) de support et de fixation d'une structure (4), notamment une structure de travail en encorbellement, l'attache (10) étant du type destinée à être insérée à travers un orifice traversant (11, 11') d'une paroi (8) depuis un côté de la paroi (8) opposé à la structure (4), l'attache (10) comprenant
un corps allongé (12) adapté pour traverser la paroi (8) de part en part, entre une première face (6B) de la paroi (8), du côté opposé à la structure (4), et une deuxième face (6A) opposée de la paroi (8), du côté de la structure (4);
au moins un organe déployable (24, 27) monté mobile par rapport au corps (12) entre une première position d'insertion et de retrait de l'attache (10) à travers la paroi (8) et une deuxième position déployée, dans laquelle il fait saillie à l'extérieur du corps (12) ;
**caractérisée en ce que** l'attache (10) comprend en outre un adaptateur (61) en matériau rigide, monté sur le corps (12), et délimitant une portée d'appui (68) contre une surface interne supérieure (63) de l'orifice traversant (11, 11'), et **en ce que** le corps (12) et l'adaptateur (61) comportent en outre des moyens complémentaires (80, 83) de solidarisation en rotation.

2. Attache (10) selon la revendication 1, **caractérisée en ce que** l'adaptateur (61) est monté coulissant sur le corps (12) le long de l'axe longitudinal (A) du corps (12).

3. Attache (10) selon la revendication 1 ou la revendication 2, **caractérisée en ce que** l'attache (10) comprend en outre un organe de serrage (55) de l'attache (10) sur la paroi (8), ledit organe de serrage (55) étant propre à prendre appui sur ladite première face (6B) de la paroi (8), et **en ce que** l'adaptateur (61) est solidaire dudit organe de serrage (55).

4. Attache (10) selon l'une quelconque des revendications 2 ou 3, **caractérisée en ce que** l'adaptateur (61) est propre à être poussé dans l'orifice (11, 11') de la paroi (8) au moyen d'un organe de poussée (58), de préférence par vissage d'un écrou (58) sur le corps (12).

5. Attache (10) selon l'une quelconque des revendications 1 à 4, **caractérisée en ce que** l'adaptateur (61) est une rondelle en forme de fer à cheval chevauchant le corps (12) et comportant une âme (71) en saillie vers le haut par rapport au corps (12) et deux ailes (74) enserrant le corps (12) et s'étendant vers le bas à partir de l'âme (71).

6. Attache (10) selon la revendication 5, **caractérisée en ce que** l'adaptateur (61) a un contour extérieur circulaire.

7. Attache (10) selon l'une quelconque des revendications 1 à 6, **caractérisée en ce que** les moyens complémentaires de solidarisation en rotation comprennent deux méplats (83) s'étendant dans des plans parallèles et formés sur le corps (12), ces méplats (83) coopérant chacun avec une surface intérieure complémentaire respective (80) de l'adaptateur (61).

8. Attache (10) selon l'une quelconque des revendications 1 à 7, **caractérisée en ce que** le corps (12) comprend un tronçon distal (21) sensiblement cylindrique et **en ce que** la hauteur de l'attache (10) au droit de l'adaptateur (61) et le diamètre du tronçon distal (21) du corps (12) sont sensiblement égaux et en outre sensiblement égaux au diamètre minimal de l'orifice (11, 11') dans lequel l'attache (10) est destinée à être insérée.

9. Attache (10) selon les revendications 6 et 8 prises ensembles, **caractérisée en ce que** l'adaptateur (61) a un diamètre sensiblement égal au diamètre du tronçon distal (21) du corps (12).

10. Attache (10) selon l'une quelconque des revendications précédentes, **caractérisée en ce qu'**elle comprend en outre des moyens de déplacement de l'au moins un organe déployable (24, 27) entre la première position et la deuxième position, lesdits moyens de déplacement comprenant un coulisseau (42), adapté pour coulisser dans le corps (12) de manière à déplacer l'au moins un organe déployable (24, 27) entre la première position et la deuxième position, et, pour chaque organe déployable (24, 27), un pion (45, 47) solidaire du coulisseau (42) et adapté pour coopérer avec une lumière oblongue (50, 52) formée dans l'organe déployable (24, 27) de manière à déplacer chaque organe déployable (24, 27) de sa première position vers sa deuxième position lors du coulissement du coulisseau (42) dans un sens et à déplacer chaque organe déployable (24, 27) de sa deuxième position vers sa première position lors d'un coulissement du coulisseau (42) dans un sens opposé.

11. Attache (10) selon l'une quelconque des revendications précédentes, **caractérisée en ce qu'**au moins certaines pièces de l'attache (10) présentent une couche de surface propre à protéger l'attache (10) contre la corrosion et à faciliter le mouvement entre les pièces de l'attache (10) sans ajout de lubrifiant.

12. Attache (10) selon l'une quelconque des revendications précédentes, **caractérisée en ce que** l'un des organes déployables est une patte (24) de retenue de la structure (4), laquelle comporte à une extrémité proximale (24A) une surface sensiblement plane (107) d'appui de la structure (4), adaptée pour recevoir la structure (4) en appui axial et prolongée en direction d'une extrémité distale (24B) de la patte de retenue (24) par une surface concave (109) qui, en cours d'utilisation, n'est pas en contact avec la structure (4).

13. Ensemble (2) de structure de travail en encorbellement comprenant une structure (4) de travail en encorbellement et au moins une attache (10) de support et de fixation selon l'une quelconque des revendications précédentes, adaptée pour assurer le support de la structure (4).

## Claims

1. Fastener (10) for supporting and for fixing a structure (4), in particular a cantilever work structure, the fastener (10) being of the type intended to be inserted through a through-hole (11, 11') in a wall (8) from a side of the wall (8) which is remote from the structure (4), the fastener (10) comprising:
an elongated body (12) adapted to extend all the way through the wall (8), between a first face (6B) of the wall (8), on the side which is remote from the structure (4), and a second, opposing face (6A) of the wall (8), on the side of the structure (4);
at least one deployable member (24, 27) mounted so as to be movable with respect to the body (12) between a first position for inserting and for withdrawing the fastener (10) through the wall (8) and a second deployed position in which it projects from the body (12);
**characterised in that** the fastener (10) further comprises an adaptor (61) made of rigid material, mounted on the body (12) and defining a bearing surface (68) for resting against an upper internal surface (63) of the through-hole (11, 11'), and **in that** the body (12) and the adaptor (61) further comprise complementary rotational engagement means (80, 83).

2. Fastener (10) according to claim 1, **characterised in that** the adaptor (61) is mounted on the body (12) so as to slide along the longitudinal axis (A) of the body (12).

3. Fastener (10) according to either claim 1 or claim 2, **characterised in that** the fastener (10) further comprises a member for clamping (55) the fastener (10) to the wall (8), said clamping member (55) being capable of being supported against said first face (6B) of the wall (8), and **in that** the adaptor (61) is integral with said clamping member (55).

4. Fastener (10) according to either claim 2 or claim 3, **characterised in that** the adaptor (61) is capable of being pushed into the hole (11, 11') in the wall (8) by means of a thrust member (58), preferably by screwing a screw (58) on the body (12).

5. Fastener (10) according to any of claims 1 to 4, **characterised in that** the adaptor (61) is a washer in the shape of a horseshoe, straddles the body (12) and comprises a core (71) projecting upwards with respect to the body (12) and two wings (74) enclosing the body (12) and extending downwards from the core (71).

6. Fastener (10) according to claim 5, **characterised in that** the adaptor (61) has a circular external contour.

7. Fastener (10) according to any of claims 1 to 6, **characterised in that** the complementary rotational engagement means comprise two flat surfaces (83) extending in parallel planes and formed on the body (12), said flat surfaces (83) each cooperating with a corresponding complementary internal surface (80) of the adaptor (61).

8. Fastener (10) according to any of claims 1 to 7, **characterised in that** the body (12) comprises a substantially cylindrical distal section (21) and **in that** the height of the fastener (10) at the level of the adaptor (61) and the diameter of the distal section (21) of body (12) are substantially equal and further substantially equal to the minimum diameter of the hole (11, 11') into which the fastener (10) is intended to be inserted.

9. Fastener (10) according to claim 6 in conjunction with claim 8, **characterised in that** the adaptor (61) has a diameter which is substantially equal to the diameter of the distal section (21) of the body (12).

10. Fastener (10) according to any of the preceding claims, **characterised in that** it further comprises means for displacing the at least one deployable member (24, 27) between the first position and the second position, said displacement means comprising a slider (42) which is adapted for sliding in the body (12) so as to displace the at least one deployable member (24, 27) between the first position and the second position, and comprising, for each deployable member (24, 27), a pin (45, 47) which is integral with the slider (42) and adapted to cooperate with an oblong aperture (50, 52) formed in the deployable member (24, 27) so as to displace each deployable member (24, 27) from its first position towards its second position when the slider (42) slides in one direction and to displace each deployable member (24, 27) from its second position towards its first position when the slider (42) slides in an opposite direction.

11. Fastener (10) according to any of the preceding claims, **characterised in that** at least some parts of the fastener (10) have a surface coating capable of protecting the fastener (10) from corrosion and of facilitating movement between the parts of the fastener (10) without adding lubricant.

12. Fastener (10) according to any of the preceding claims, **characterised in that** one of the deployable members is a tab (24) for retaining the structure (4), which tab comprises, at a proximal end (24A), a substantially planar surface (107) for supporting the structure (4), which surface is adapted to receive the structure in an axially supporting manner and is extended in the direction of a distal end (24B) of the retaining tab (24) by a concave surface (109) which, during use, is not in contact with the structure (4).

13. Assembly (2) for a cantilever work structure comprising a cantilever work structure (4) and at least one supporting and fixing fastener (10), according to any of the preceding claims, adapted to support the structure (4).

## Patentansprüche

1. Befestigung (10) zum Halten und Befestigen einer Struktur (4), insbesondere einer auskragenden Arbeitsstruktur, wobei die Befestigung (10) von der Art ist, die dafür bestimmt ist, von einer Seite einer Wand (8) gegenüber der Struktur (4) aus durch eine durchgehende Öffnung (11, 11') der Wand (8) geschoben zu werden, wobei die Befestigung (10) Folgendes umfasst:
einen länglichen Körper (12), der ausgelegt ist, die Wand (8) zu durchqueren, zwischen einer ersten Seite (6B) der Wand (8) auf der Seite gegenüber der Struktur (4) und einer zweiten Seite (6A) gegenüber der Wand (8) auf der Seite der Struktur (4);
mindestens ein spreizbares Element (24, 27), das bezogen auf den Körper (12) beweglich zwischen einer ersten Position des Einführens und Zurückziehens der Befestigung (10) durch die Wand (8) hindurch und einer zweiten gespreizten Position montiert ist, in der es aus dem Körper (12) ragt;
**dadurch gekennzeichnet, dass** die Befestigung (10) ferner einen Adapter (61) aus einem starren Material umfasst, der an dem Körper (12) montiert ist und eine Auflagefläche (68) an einer oberen Innenfläche (63) der durchgehenden Öffnung (11, 11') begrenzt, und dadurch, dass der Körper (12) und der Adapter (61) ferner sich ergänzende, drehfest verbundene Mittel (80, 83) aufweisen.

2. Befestigung (10) nach Anspruch 1, **dadurch gekennzeichnet, dass** der Adapter (61) auf dem Körper (12) entlang der Längsachse (A) des Körpers (12) verschiebbar montiert ist.

3. Befestigung (10) nach Anspruch 1 oder Anspruch 2, **dadurch gekennzeichnet, dass** die Befestigung (10) ferner ein Element (55) zum Anpressen der Befestigung (10) an der Wand (8) umfasst, wobei das Anpresselement (55) dafür geeignet ist, an der ersten Seite (6B) der Wand (8) anzuliegen, und dadurch, dass der Adapter (61) fest mit dem Anpresselement (55) verbunden ist.

4. Befestigung (10) nach einem der Ansprüche 2 oder 3, **dadurch gekennzeichnet, dass** der Adapter (61) dafür geeignet ist, mittels eines Schubelements (58) in die Öffnung (11, 11') der Wand (8) geschoben zu werden, vorzugsweise durch Schrauben einer Mutter (58) auf den Körper (12).

5. Befestigung (10) nach einem der Ansprüche 1 bis 4, **dadurch gekennzeichnet, dass** der Adapter (61) eine Scheibe in Form eines Hufeisens ist, die den Körper (12) überdeckt und einen Steg (71) aufweist, der bezogen auf den Körper (12) nach oben ragt, und zwei Schenkel (74), die den Körper (12) umklammern und von dem Steg (71) aus nach unten verlaufen.

6. Befestigung (10) nach Anspruch 5, **dadurch gekennzeichnet, dass** der Adapter (61) einen kreisförmigen Außenumfang aufweist.

7. Befestigung (10) nach einem der Ansprüche 1 bis 6, **dadurch gekennzeichnet, dass** die sich ergänzenden, drehfest verbundenen Mittel zwei Abflachungen (83) umfassen, die in parallelen Ebenen verlaufen und an dem Körper (12) gebildet sind, wobei diese Abflachungen (83) jeweils mit einer entsprechenden ergänzenden Innenfläche (80) des Adapters (61) zusammenwirken.

8. Befestigung (10) nach einem der Ansprüche 1 bis 7, **dadurch gekennzeichnet, dass** der Körper (12) einen im Wesentlichen zylindrischen distalen Abschnitt (21) umfasst und dadurch, dass die Höhe der Befestigung (10) im Bereich des Adapters (61) und der Durchmesser des distalen Abschnitts (21) des Körpers (12) im Wesentlichen gleich sind und ferner im Wesentlichen gleich dem Mindestdurchmesser der Öffnung (11, 11'), in die die Befestigung (10) geschoben werden soll.

9. Befestigung (10) nach Anspruch 6 und 8 gemeinsam, **dadurch gekennzeichnet, dass** der Adapter (61) einen Durchmesser aufweist, der im Wesentlichen gleich dem Durchmesser des distalen Abschnitts (21) des Körpers (12) ist.

10. Befestigung (10) nach einem der vorhergehenden Ansprüche, **dadurch gekennzeichnet, dass** sie ferner Mittel zum Bewegen des mindestens einen spreizbaren Elements (24, 27) zwischen der ersten Position und der zweiten Position umfasst, wobei die Bewegungsmittel einen Schieber (42) umfassen, der ausgelegt ist, um in dem Körper (12) zu gleiten, um das mindestens eine spreizbare Element (24, 27) zwischen der ersten Position und der zweiten Position zu bewegen, und, für jedes spreizbare Element (24, 27), einen Stift (45, 47), der fest mit dem Schieber (42) verbunden ist und ausgelegt ist, mit einer länglichen Öffnung (50, 52), die in dem spreizbaren Element (24, 27) gebildet ist, zusammenzuwirken, um während des Verschiebens des Schiebers (42) in eine Richtung jedes spreizbare Element (24, 27) aus seiner ersten Position in Richtung seiner zweiten Position zu bewegen und während des Verschiebens des Schiebers (42) in eine entgegengesetzte Richtung jedes spreizbare Element (24, 27) aus seiner zweiten Position in Richtung seiner ersten Position zu bewegen.

11. Befestigung (10) nach einem der vorhergehenden Ansprüche, **dadurch gekennzeichnet, dass** mindestens bestimmte Teile der Befestigung (10) eine Oberflächenschicht aufweisen, die geeignet ist, die Befestigung (10) vor Korrosion zu schützen und die Bewegung zwischen den Teilen der Befestigung (10) ohne Zusatz von Schmiermittel zu erleichtern.

12. Befestigung (10) nach einem der vorhergehenden Ansprüche, **dadurch gekennzeichnet, dass** eins der spreizbaren Elemente eine Sicherungshalterung (24) für die Struktur (4) ist, die an einem proximalen Ende (24A) eine im Wesentlichen ebene Stützfläche (107) für die Struktur (4) aufweist, die ausgelegt ist, um die Struktur (4) axial anliegend aufzunehmen und in Richtung eines distalen Endes (24B) der Sicherungshalterung (24) durch eine konkave Fläche (109) verlängert ist, die während der Verwendung die Struktur (4) nicht berührt.

13. Anordnung (2) einer auskragenden Arbeitsstruktur, die eine auskragende Arbeitsstruktur (4) und mindestens eine Befestigung (10) zum Halten und Befestigen nach einem der vorhergehenden Ansprüche umfasst, die ausgelegt ist, der Struktur (4) Halt zu bieten.
